# EUROPEAN PATENT APPLICATION

(11) **EP 2 104 201 A2**
(43) Date of publication of application: **23.09.2009**
(21) Application number: 09153052.7
(22) Date of filing: 17.02.2009
(51) Int. Cl.: H02J 9/00

(54) **Simple passive solution for providing power interruption capability with controlled inrush current in critical power supply**

(30) Priority: 11.03.2008 US 46306
(71) Applicant: Honeywell International Inc., Morristown, NJ 07962 (US)
(72) Inventor: De, Sukumar, Morristown, NJ 07962-2245 (US); Saxena, Sunit Kumar, Morristown, NJ 07962-2245 (US)
(74) Representative: Buckley, Guy Julian

(57) **Abstract**

An electrical power supply system is provided with capacitor-based hold-up protection. Inrush current to the capacitor is passively limited with a combination of a resistor and a rectifying device connected to a hold-up capacitor. During start-up, the rectifying device may be reverse-biased and a portion of input current is shunted to charge the hold-up capacitor. In the event of input power failure, the rectifying device is forward biased and the capacitor may be discharged to a load of the power supply thereby providing hold-up protection for the load.

## Description

### BACKGROUND OF THE INVENTION

The present invention is in the field of electrical power supply control and, more particularly, control of electrical power supply systems that may be subject to input-power interruptions.

Some power supply systems are constructed to provide uninterrupted power for critical applications. For example, in some aerospace applications, power supplies may be required to supply regulated voltage to critical loads during power interruptions at their input. Such critical loads may include, for example, avionics control.

In some direct current (DC) to DC converters and alternating current (AC) to DC converters, bulk capacitors are used at DC inputs or in a DC link to provide "hold-up" time to mitigate input power interruptions. In many aerospace applications, high hold-up time (typically more than 50 milliseconds (ms)) may be required. High hold-up time may require use of very high energy-storage, leading to large value of the bulk capacitor. Large value bulk capacitors demand very high inrush current during start up of a power supply. Additionally, when input power resumes after a power interruption period, high inrush currents may develop.

In the prior art, various passive mechanisms have been employed to limit inrush current. In the simplest case, a current limiting resistor may be placed in series with a power conduction path. In some cases, the current limiting resistor may be a Negative Temperature Coefficient (NTC) resistor. NTC resistors may reduce undesirable power loss associated with use of conventional current limiting resistors. But NTC resistors may not be readily employed in high power applications.

Furthermore, prior-art passive systems may not be capable of limiting inrush current after a power interruption period when input power resumes while a system output is under load. Additionally, prior art passive systems may not be capable of limiting inrush current during initial starting under load.

Various non-passive mechanisms have been employed in the prior art to overcome passive system limitations. For example, the current limiting resistor may be shorted by a time-delayed switch. Also, constant current charging of hold-up capacitors has been employed in the prior art to address the above issue. However, these non-passive, or active, solutions are typically complex and difficult to implement.

As can be seen, there is a need to provide a power supply system which may provide uninterrupted power output if and when input power is interrupted. In particular, there is a need to provide such a system that may operate passively and at high power levels with low power loss.

### SUMMARY OF THE INVENTION

In one aspect of the present invention an electrical power supply apparatus comprises a hold-up capacitor connected to at least one bus, a resistor interposed between the capacitor and a second bus, and a rectifying device interposed between the capacitor and the second bus.

In another aspect of the present invention a hold-up circuit for an electrical power supply comprises a hold-up capacitor connected to a resistor and a rectifying device. The resistor and the rectifying device are connected in parallel with one another.

In still another aspect of the present invention a method for providing hold-up protection for an electrical power supply comprises the steps of reverse biasing a rectifying device when input power is supplied at a desired voltage to the power supply, forward biasing the rectifying device in the event of input power failure, and discharging a capacitor through the rectifying device to a load of the power supply when the rectifying device is forward biased.

These and other features, aspects and advantages of the present invention will become better understood with reference to the following drawings, description and claims.

### BRIEF DESCRIPTION OF THE DRAWINGS

Figure 1 is a block diagram of an illustrative embodiment of a hold-up circuit in accordance with the invention;

Figure 2 is a block diagram of a power supply system in accordance with an embodiment of the invention;

Figure 3 is a block diagram of an illustrative embodiment of a power supply system in accordance with the invention;

Figure 4 is a block diagram of a second illustrative embodiment of a power supply system in accordance with the invention;

Figure 5 is a block diagram of a third illustrative embodiment of a power supply system in accordance with the invention;

Figure 6 is a block diagram of a fourth illustrative embodiment of a power supply system in accordance with the invention;

Figure 7 is a block diagram of a second illustrative embodiment of a hold-up circuit in accordance with the present invention;

Figure 8 is a block diagram of a third illustrative embodiment of a hold-up circuit in accordance with the present invention; and

Figure 9 is a flow chart of a method for providing hold-up protection in accordance with the present invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Broadly, the present invention may be useful in electrical power supply systems which provide uninterrupted power to a load. More particularly, the present invention may provide such a power supply system with a capacitor based "hold-up" time that may mitigate adverse effects of input power interruptions. The present invention may be particularly useful in vehicles such as aircraft which may employ power systems to supply regulated voltage to critical loads such as avionics control. The present invention may provide requisite hold-up time and may provide a passive system for limiting inrush current.

In contrast to prior-art power control systems, among other things, the present invention may perform control of inrush current to a hold-up capacitor without employing an active current control scheme. The present invention, instead of an active switching system, may utilize a passive resistor-based system for inrush current control. The resistor-based system may employ a unique combination of a resistor, a rectifying element and a capacitor to passively limit inrush current without diminishing hold-up capability in a power supply.

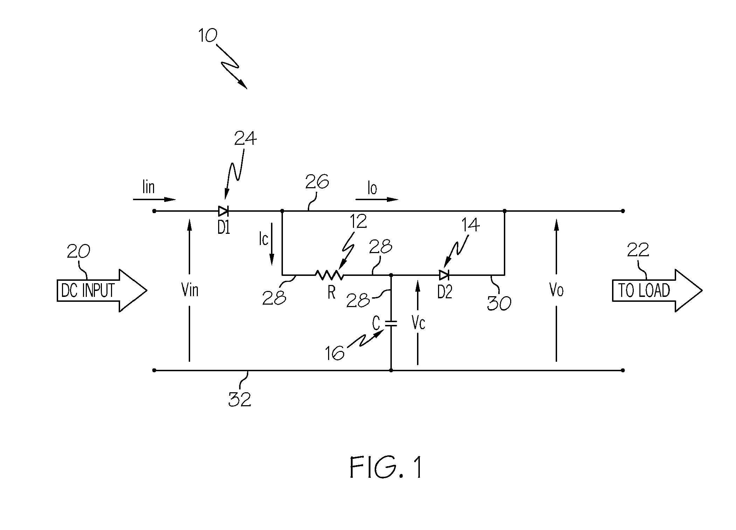

Referring now to Figure 1, a hold-up circuit is designated generally by the numeral 10. The hold-up circuit 10 may comprise a resistor 12, a rectifying device such as a diode 14 and a hold-up capacitor 16. The circuit 10 may be interposed between a DC input 20 and a load 22. In some embodiments of the present invention an isolating rectifying device or diode 24 may be interposed on a power conductor or bus 26.

A current path 28 may be provided between the power conductor 26 and the resistor 12. The current path 28 may continue through the resistor 12 to the hold-up capacitor 16 and the diode 14. A current path 30 may be provided between the diode 14 and the power conductor 26. A second power conductor or bus 32 may interconnect the input 20 and the load 22. The hold-up capacitor 16 may be interposed between the current path 28 and the bus 32.

It may be seen that in operation, whenever a voltage (Vin) is applied between the buses 26 and 32 at the input 20, an output current (lo) may develop in the conductor 26. A charging current (lc) may pass through the current path 28 and the resistor 12 to provide charging of the capacitor 16. Even though the capacitor 16 may be charging at initiation of voltage Vin at the input 20, inrush current (lin) may be only slightly larger than lo. The resistor 12 may substantially limit the current lc.

It may also be seen that the diode 14 may be reverse-biased unless and until voltage Vc exceeds Vo. In this context, the capacitor 16 may become charged with the current lc because the diode 14 may preclude current flow from the resistor 12 to the load 22. Unlike prior-art systems, current lo may pass directly to the load without passing through an inrush current control resistor. Consequently the resistor 12 may be selected to have a large value. When the capacitor 16 becomes fully charged, current lc may cease and there may be no further power loss through the resistor 12. Thus, even if the resistor 12 has a high resistance, power loss associated with the resistor 12 is limited.

In the event of power interruption at the input 20, the voltage Vin may drop and the voltage Vo may fall to a level below Vc. In that case, the diode 14 may become forward-biased and the capacitor 16 may discharge to maintain an output voltage equal to Vc. The capacitor 16 may be selected to provide a desired hold-up time during its discharge. In a typical aircraft application, hold-up time for a critical load may be about 50 milliseconds (ms) or more.

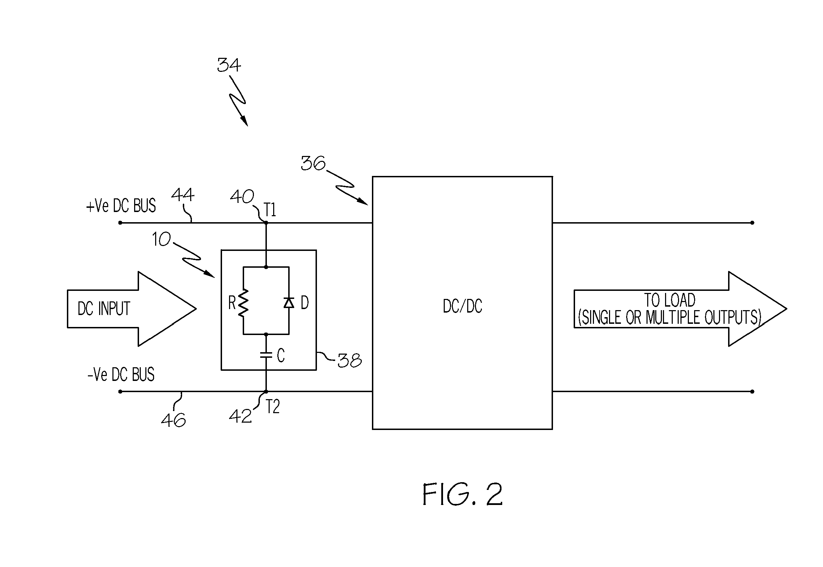

Referring now to Figure 2, the hold-up circuit 10 may be seen positioned on a power system 34 constructed in accordance with the present invention. The power system 34 may comprise a DC/DC converter 36. The hold-up circuit 10 may be configured and assembled in a package 38 as a two-terminal device. The hold-up circuit 10 may be provided with terminals 40 and 42 which may be connected to DC input buses 44 and 46 respectively.

It may be seen that the packaged hold-up circuit 10 shown in Figure 2 may be readily and conveniently installed on the power system 34. The packaged circuit 10 may be installed during initial construction of the power system 34 or it may be installed as a retrofit on a pre-existing one of the power systems 34. In this regard, the packaged hold-up circuit 10 may be utilized as an optional upgrade device for one of the power systems 34. If the power system is to be employed in a critical application such as avionics power supply, then the hold-up circuit 10 may be installed. If, on the other hand, the power system 34 is to be employed in a non-critical application, a cost savings may be achieved by forgoing installation of one of the hold-up circuits 10.

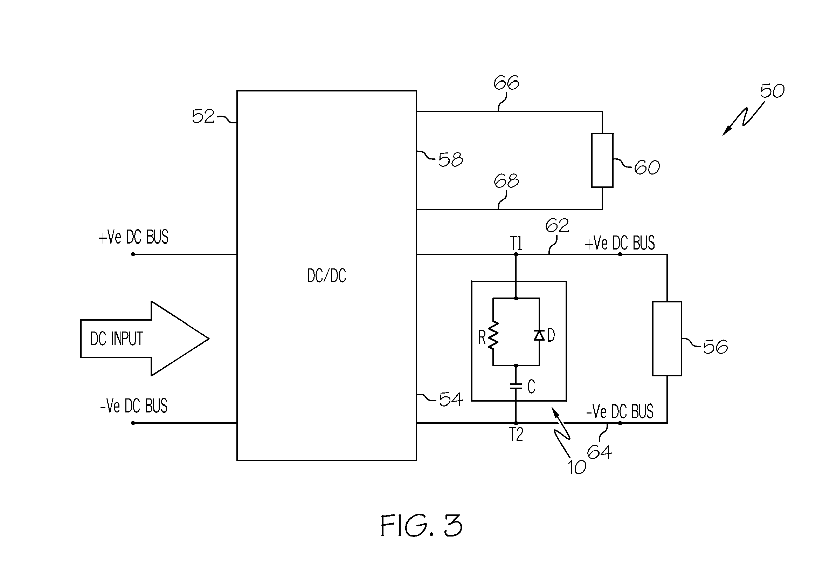

Referring now to Figure 3, an alternate embodiment of an inventive power system 50 may comprise a DC/DC converter 52 with multiple outputs. A first output 54 may supply power to a critical load 56. A second output 58 may supply power to a non-critical load 60. For simplicity, the power system 50 is illustrated with two outputs. It should be understood that the power system 50 may be provided with any number of outputs which may supply power to any combination of critical and non-critical loads.

The output 54 may be connected to the critical load 56 load through buses 62 and 64. One of the hold-up circuits 10 may be connected between the buses 62 and 64 to provide hold-up protection for the critical load 56.

The output 58 may be connected to the non-critical load 60 through buses 66 and 68. The power system 50 is illustrative of a versatility of the packaged hold-up circuit 10. The circuits 10 may be placed between output buses only as needed, for hold-up protection of critical loads. Space and cost savings may be achieved by forgoing installation of the hold-up circuits 10 in outputs that may supply non-critical loads.

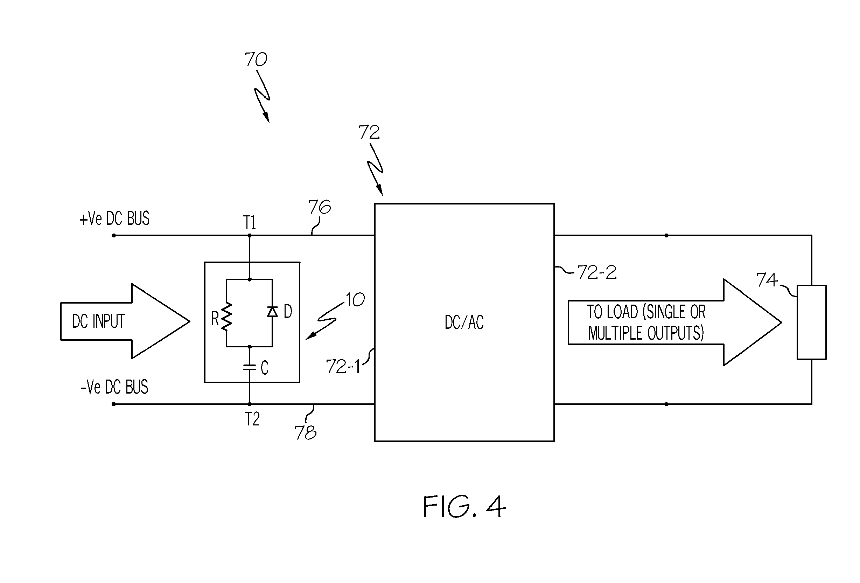

Referring now to Figure 4, an inventive power supply system 70 may comprise a DC/AC converter 72 with an input 72-1 and an output 72-2. The converter 72 may provide power to a resistive load 74. The converter 72 may provide single or multiple phase AC output. The converter may be a variable voltage variable frequency (VVVF) type or a fixed voltage and frequency type. When the hold-up circuit 10 is connected between DC input buses 76 and 78, the power system 70 may provide AC power to the load 74.

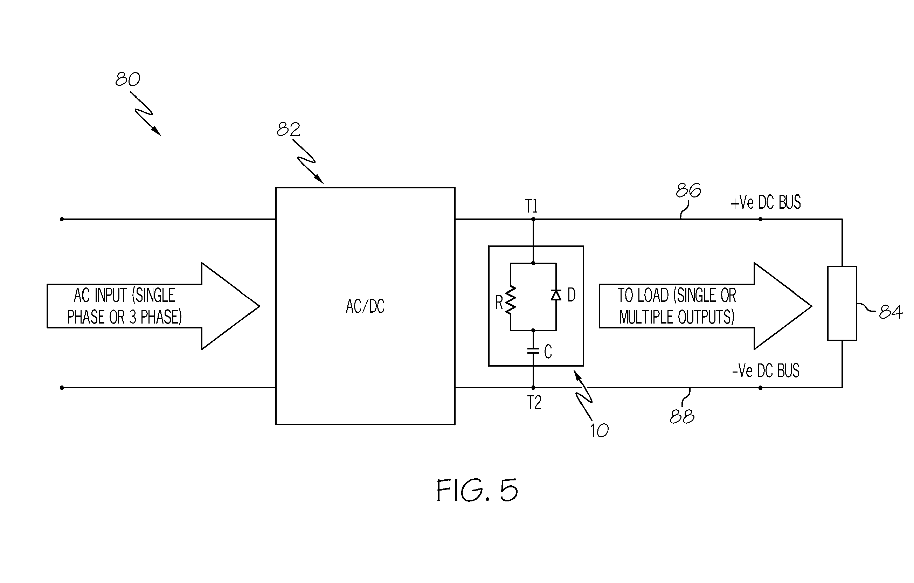

Referring now to Figure 5, an inventive power system 80 may comprise an AC/DC converter 82. The converter 82 may provide DC power to a critical load 84. For simplicity, the power system 80 is illustrated with a single set of output buses 86 and 88. One of the hold-up circuits 10 may be connected between the buses 86 and 88 to provide hold-up protection for the load 84. It should be understood, however, the power system 80 may comprise multiple outputs (not shown) and each of the multiple outputs may or may not be protected with one of the hold-up circuits 10.

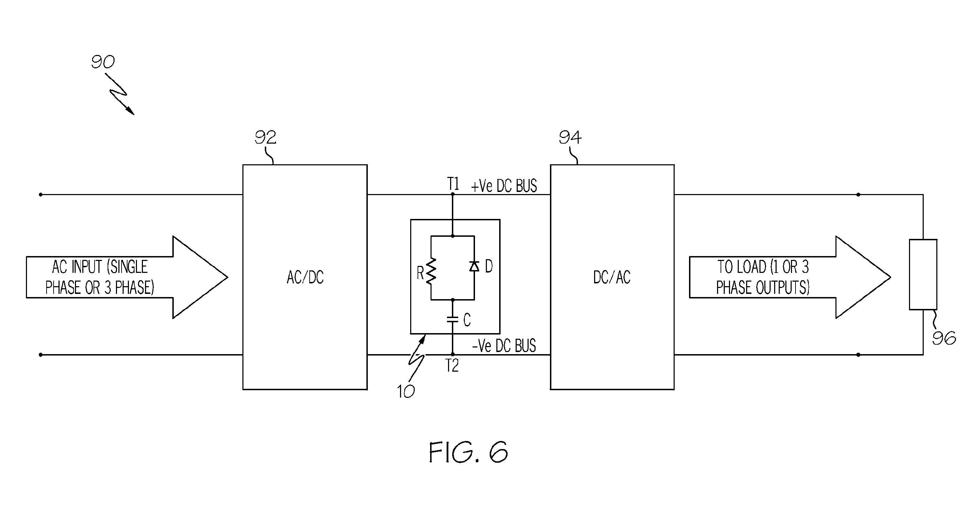

Referring now to Figure 6, an inventive power system 90 may comprise an AC/DC converter 92 and a DC/AC converter 94. One of the hold-up circuits 10 may be interposed between the converters 92 and 94. The hold-up circuit 10 of Figure 6 may provide hold-up protection for a load 96.

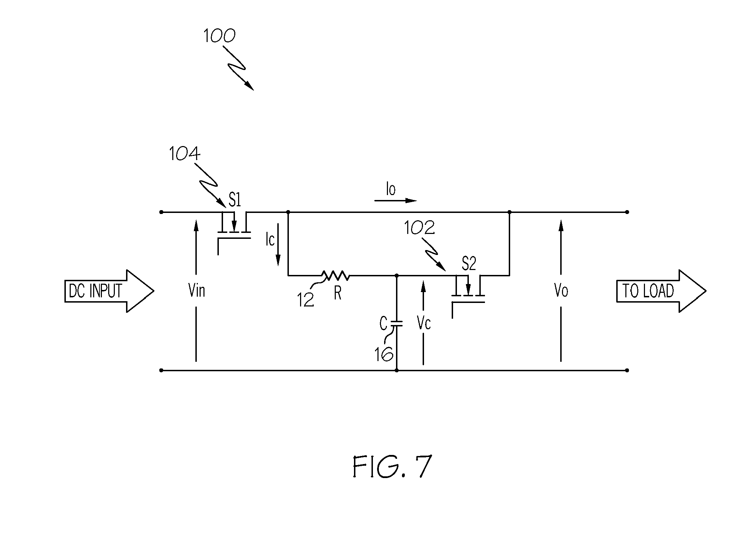

Referring now to Figure 7, an alternative embodiment of a hold-up circuit 100 comprises rectifying devices 102 and 104 which may be controlled switching devices such as metal-oxide field effect transistors (MOSFET's) or Bipolar Junction Transistors or equivalent. In operation the switches 102 and 104 may function in a manner similar to the diodes 14 and 24 of Figure 1. In the context of the hold-up circuit 100, the controlled semiconductor switches 102 and 104 may be kept continuously on or may be operated with synchronous switching. At certain current levels, a forward-voltage drop of a MOSFET may be lower than that of a diode rectifier. Under these conditions, the MOSFETS 102 and 104, as compared to the diodes 14 and 24 of Figure 1, may provide for a reduction of rectifier conduction loss.

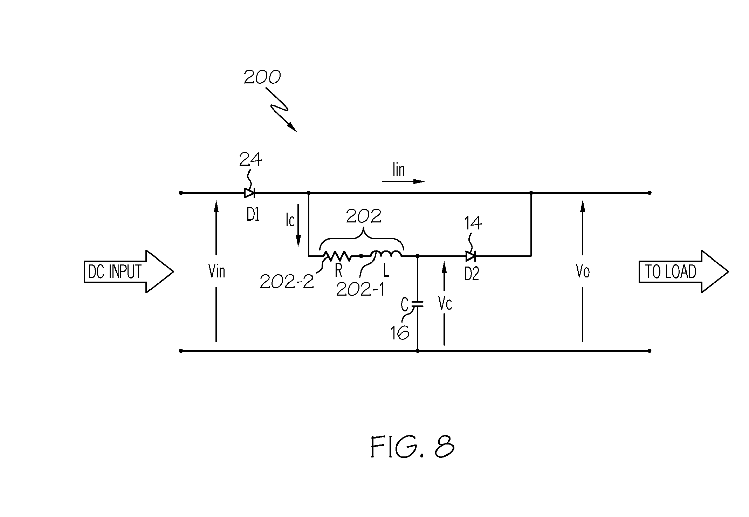

Referring now to Figure 8, an alternative embodiment of a hold-up circuit 200 may comprise a resistor-inductor (R-L) device 202 to provide inrush current control. An inductor 202-1 may be placed in series with a resistor 202-2 to slow down a rate of change of inrush current.

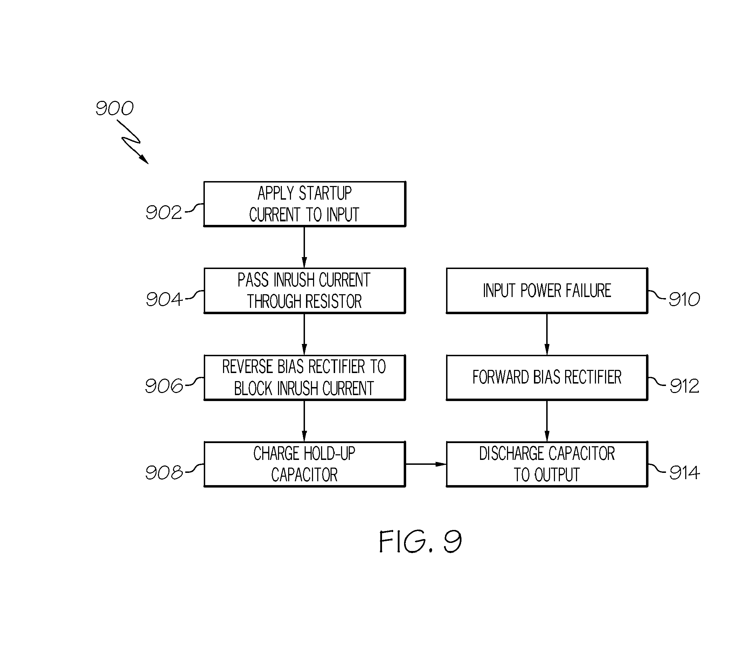

In one embodiment of the present invention, a method is provided for providing hold-up protection in a power system with passive control of inrush current. In that regard the method may be understood by referring to Figure 9. In Figure 9, a flow chart portrays various aspects of an inventive method 900. In a step 902, startup input current may be applied to a power system (e.g., lin may be applied to buses 26 and 32 at a voltage Vin). In a step 904, a capacitor-charging portion of the input current may be passed through a resistor (e.g., the current lc may pass through the resistor 12). In a step 906, a rectifying device may be reverse biased to block the capacitor-charging current from passage to an output of the power system (e.g., the diode 14 may be reverse biased when the voltage Vin exceeds Vc, thereby blocking current along the conduction path 30). In a step 908 a hold-up capacitor may be charged (e.g., the capacitor 16 may be charged with the current lc).

In a step 910, input power failure may occur. In a step 912 the rectifying device may become forward biased (e.g., power failure may drop Vin to a level below Vc resulting in forward biasing of the diode 14). In a step 914, the hold-up capacitor may discharge to an output of the power system and thus provide hold-up for the power system (e.g., the capacitor 16 may discharge through the forward biased diode 14 into the load 22).

It should be understood, of course, that the foregoing relates to exemplary embodiments of the invention and that modifications may be made without departing from the spirit and scope of the invention as set forth in the following claims.

## Claims

1. An electrical power supply apparatus (34) comprising:
a hold-up capacitor (16) connected to at least one bus (46);
a resistor (12) interposed between the capacitor (16) and a second bus (44); and
a rectifying device (14) interposed between the capacitor (16) and the second bus (44).

2. The apparatus of claim 1 wherein the resistor (12) is connected in parallel with the rectifying device (14).

3. The apparatus of any one or more of claims 1-2 wherein the rectifying device (14) is reverse biased when input voltage is present across the buses (44 and 46).

4. The apparatus of any one or more of claims 1-3 wherein the rectifying device (14) is forward biased when input voltage is not present across the buses (44 and 46).

5. The apparatus (34) of any one or more of claims 1-4 further comprising:
a converter (52);
the converter having an output (54); and
the hold-up capacitor (16) is connected to an output power bus (64) of the output.
6. The apparatus of claim 1 further comprising:
a direct-current (DC) to alternating current (AC) converter (72);
the converter having an input (72-1) and an output (72-2);
the hold-up capacitor (16) is connected to an input power bus (78) of the converter (72) ; and
the output (72-2) is connected to a load (74).
